# DEMANDE DE BREVET EUROPEEN

(11) **EP 1 416 351 A1**
(43) Date de publication de la demande: **06.05.2004**
(21) Numéro de dépôt: 03356162.2
(22) Date de dépôt: 20.10.2003
(51) Int. Cl.: G05G 9/047

(54) **Dispositif de commande d'un ordinateur**

(30) Priorité: 21.10.2002 FR 0213092
(71) Demandeur: SMOBY, F-39170 Lavans les Saint Claude (FR)
(72) Inventeur: Taillard, Christian Guy, 39260 Meussia (FR); Videau, Muriel Anne Henriette, 39170 Lavans les Saint Claude (FR)
(74) Mandataire: Myon, Gérard

(57) **Abrégé**

Ce dispositif comporte :
- une manette articulée apte à être déplacée pour exprimer un ordre d'effectuer un déplacement dans une direction,
- des capteurs disposés pour émettre des signaux amonts dépendant de la position de la manette et exprimant l'ordre,
- une unité de traitement prévue pour convertir les signaux amonts en un signal aval qui contient l'ordre et qui est adapté pour commander directement l'ordinateur, et
- des moyens (27, 28, 29, 30) pour pouvoir inverser ou non la direction indiquée dans l'ordre contenu par le signal aval.

L'invention permet d'adapter le dispositif au fait que l'utilisateur est droitier ou gaucher.

## Description

La présente invention concerne un dispositif de commande d'un ordinateur, ce dispositif comportant une manette articulée à déplacer pour exprimer un ordre.

Un tel dispositif est couramment utilisé dès que le programme exécuté par l'ordinateur est un jeu. Outre la manette articulée, il peut posséder des boutons-poussoir ou d'autres organes de commande. Toutefois, on dispose actuellement d'un choix limité quant aux emplacements possibles pour ces boutons-poussoir, dans la mesure où ces derniers doivent pouvoir être aussi facilement manipulés par un droitier que par un gaucher.

L'invention a donc au moins pour but d'augmenter les possibilités en ce qui concerne la disposition d'organes de commande équipant un dispositif de commande d'un ordinateur, par rapport à une manette articulée de ce dispositif de commande.

A cet effet, l'invention a pour objet un dispositif de commande d'un ordinateur, ce dispositif comportant :
- une manette articulée apte à être déplacée pour exprimer un ordre d'effectuer un déplacement dans une direction,
- des capteurs disposés pour émettre des signaux amonts dépendant de la position de la manette et exprimant l'ordre, et
- une unité de traitement prévue pour convertir les signaux amonts en un signal aval qui contient l'ordre et qui est adapté pour commander directement l'ordinateur,
caractérisé en ce qu'il comporte des moyens pour pouvoir inverser ou non la direction indiquée dans l'ordre contenu par le signal aval.

Selon d'autres caractéristiques avantageuses de ce dispositif de commande :
- les moyens pour pouvoir inverser ou non la direction indiquée dans l'ordre contenu par le signal aval comportent des commutateurs connectés de manière à pouvoir permuter deux à deux les connexions entre l'unité de traitement et les capteurs ;
- il comporte, d'une part, au moins deux boutons-poussoir dont chacun est prévu pour émettre l'un d'au moins deux autres ordres sous forme de signaux à destination de l'unité de traitement et, d'autre part, d'autres commutateurs connectés de manière à pouvoir permuter ou non ces deux autres ordres, entre les boutons-poussoir et l'unité de traitement ;
- chaque bouton-poussoir occupe l'un de deux emplacements sensiblement symétriques l'un de l'autre par rapport à un plan passant par la manette ;
- les capteurs sont au nombre de quatre, la manette étant rappelée vers une première position, neutre, dans laquelle cette manette n'agit sur aucun des quatre capteurs, la manette pouvant être également placée dans des deuxième, troisième, quatrième et cinquième positions dans chacune desquelles cette manette n'agit que sur l'un des quatre capteurs, la deuxième et la troisième position étant sensiblement symétriques l'une de l'autre par rapport à un premier plan, la quatrième et la cinquième position étant sensiblement symétriques l'une de l'autre par rapport à un deuxième plan sensiblement perpendiculaire audit premier plan ;
- les commutateurs sont connectés de manière à pouvoir permuter les deux connexions entre l'unité de traitement et les deux capteurs sur lesquels la manette agit successivement lorsqu'elle est placée dans la deuxième puis dans la troisième position, les commutateurs étant connectés de manière à pouvoir permuter les deux connexions entre l'unité de traitement et les deux capteurs sur lesquels la manette agit successivement lorsqu'elle est placée dans la quatrième puis dans la cinquième position ;
- il comporte un organe de commande déplaçable manuellement et prévu pour commander le changement d'état de la totalité des commutateurs.

L'invention sera bien comprise à la lecture de la description qui va suivre, donnée uniquement à titre d'exemple et faite en se référant aux dessins annexés, sur lesquels :
- la figure 1 est une vue en perspective d'un dispositif de commande conforme à l'invention,
- la figure 2 est une vue en perspective de dessous du dispositif représenté à la figure 1,
- la figure 3 est une vue de dessous d'un sous-ensemble faisant partie du dispositif des figures 1 et 2, et
- les figures 4 et 5 sont des schémas d'un circuit électrique constitutif du dispositif de commande des figures 1 et 2, et illustrent respectivement un premier et un deuxième état de ce circuit électrique.

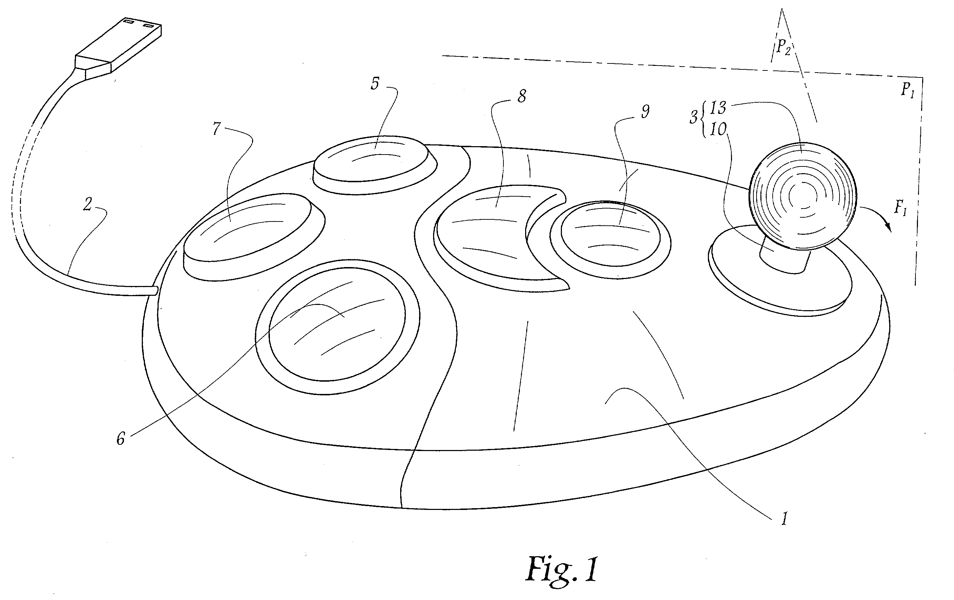

Sur la figure 1, un dispositif de commande d'un ordinateur non représenté comporte un boîtier 1, un cordon 2 pour son raccordement à cet ordinateur, une manette articulée 3, un bouton coulissant 4, ainsi que des boutons-poussoir 5, 6, 7, 8 et 9.

Le cordon 2 est conforme à la norme internationale USB-1.0 (Universal Serial Bus), du 15 janvier 1996.

Le bouton 4 est apte à coulisser entre deux positions, dans une fente percée dans une paroi inférieure du boîtier 1, tandis que les boutons-poussoir 5, 6, 7, 8 et 9, ainsi que la tige 10 de la manette 3 passent dans des trous percés dans une paroi supérieure de ce boîtier 1.

Un organe élastique, masqué par le boîtier 1, rappelle la manette 3 dans une position neutre, qui est celle que cette manette occupe aux figures 1, 2 et 3.

Le contour extérieur du boîtier 1 est sensiblement symétrique par rapport à un plan P₁ de symétrie de la manette 3 en position neutre. Il en est de même de la disposition des boutons-poussoir 5 à 9. Plus précisément, les emplacements respectifs des boutons-poussoir 5 et 6 sont sensiblement symétriques l'un de l'autre par rapport au plan P₁, tandis que les boutons-poussoir 7 à 9 sont sensiblement centrés sur une ligne s'étendant dans ce plan P₁.

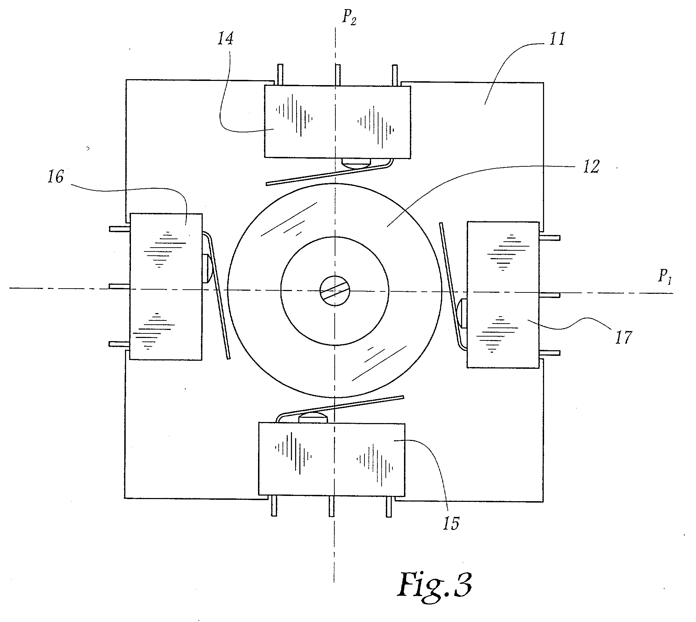

Sur la figure 3, la manette 3 est articulée, au moyen d'une rotule non visible, à une plaque de support 11 fixée à l'intérieur du boîtier 1. L'une et l'autre extrémité de sa tige 10 portent respectivement un disque intérieur 12 et une boule extérieure 13, destinée à être déplacée manuellement.

Quatre capteurs de fin de course 14, 15, 16 et 17, régulièrement répartis autour du disque 12, sont fixés à la plaque de support 11, à l'intérieur du boîtier 1. Les emplacements respectifs des capteurs 14 et 15 sont sensiblement symétriques l'un de l'autre par rapport au plan P₁. Les emplacements respectifs des capteurs 16 et 17 sont sensiblement symétriques l'un de l'autre par rapport à un plan P₂ sensiblement perpendiculaire au plan P₁.

A partir de la position neutre précitée, la manette 3 peut être basculée vers l'une de deux positions, dans chacune desquelles le disque 12 n'agit que sur l'un des capteurs 14 et 15 et qui sont sensiblement symétriques l'une de l'autre par rapport au plan P₁. La manette 1 peut également être basculée vers l'une de deux autres positions, dans chacune desquelles le disque 12 n'agit que sur l'un des capteurs 16 et 17 et qui sont sensiblement symétriques l'une de l'autre par rapport au plan P₂.

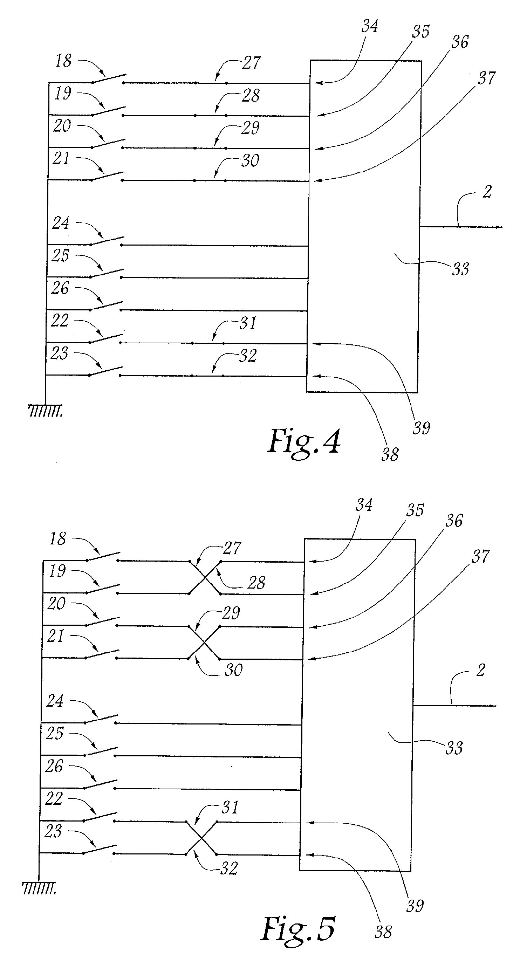

Sur les figures 4 et 5, il est représenté un circuit électrique que renferme le boîtier 1. Ce circuit électrique comporte des interrupteurs 18, 19, 20, 21, 22, 23, 24, 25 et 26, des commutateurs 27, 28, 29, 30, 31 et 32, ainsi qu'une unité de traitement 33, qui est prévue pour transformer des signaux amonts, tout ou rien selon l'état des interrupteurs 18 à 26, en un signal aval adapté pour commander directement l'ordinateur et être transporté jusqu'à ce dernier par le cordon 2.

L'interrupteur 18, l'interrupteur 19, l'interrupteur 20 et l'interrupteur 21 font respectivement partie du capteur 14, du capteur 15, du capteur 16 et du capteur 17. Ils sont ouverts lorsque le disque 12 n'agit sur aucun de ces capteurs 14 à 17. Le bouton-poussoir 5, le bouton-poussoir 6, le bouton-poussoir 7, le bouton-poussoir 8 et le bouton-poussoir 9 sont disposés pour respectivement pouvoir manoeuvrer l'interrupteur 22, l'interrupteur 23, l'interrupteur 24, l'interrupteur 25 et l'interrupteur 26.

Chaque interrupteur 18, 19, 20, 21, 22, 23, 24, 25 ou 26 possède une borne connectée à la masse et une autre borne raccordée à l'unité de traitement 33. Les commutateurs 27 et 28 sont connectés entre l'unité de traitement 34 et les interrupteurs 18 et 19, de manière à pouvoir permuter les connexions entre ces derniers et des entrées 34 et 35 de l'unité de traitement 1, c'est-à-dire de manière à pouvoir soit relier l'interrupteur 18 à l'entrée 34 et l'interrupteur 19 à l'entrée 35 (figure 4), soit relier l'interrupteur 18 à l'entrée 35 et l'interrupteur 19 à l'entrée 34 (figure 5).

Les commutateurs 29 et 30 sont connectés entre l'unité de traitement 33 et les interrupteurs 20 et 21, de manière à pouvoir permuter les connexions entre ces interrupteurs 20 et 21 et des entrées 36 et 37 de l'unité de traitement 33.

Les commutateurs 31 et 32 sont connectés entre l'unité de traitement 33 et les interrupteurs 22 et 23, de manière à pouvoir permuter les connexions entre ces interrupteurs 22 et 23 et des entrées 38 et 39 de l'unité de traitement 33.

Lorsqu'aucune des entrées 34 à 37 n'est reliée à la masse, l'unité de traitement 33 émet l'ordre de n'effectuer aucun déplacement au niveau de l'écran d'affichage de l'ordinateur.

En revanche, lorsque l'entrée 34 est reliée à la masse, l'unité de traitement 33 émet l'ordre d'effectuer un déplacement vers le bas, ce déplacement pouvant, par exemple, concerner un curseur déplaçable au niveau de l'écran d'affichage de l'ordinateur. Lorsque l'entrée 35 est à la masse, l'unité de traitement 33 émet l'ordre d'effectuer un déplacement vers le haut. Lorsque l'entrée 36 est à la masse, l'unité de traitement 33 émet l'ordre d'effectuer un déplacement vers la gauche. Lorsque l'entrée 37 est à la masse, l'unité de traitement 33 émet l'ordre d'effectuer un déplacement vers la droite.

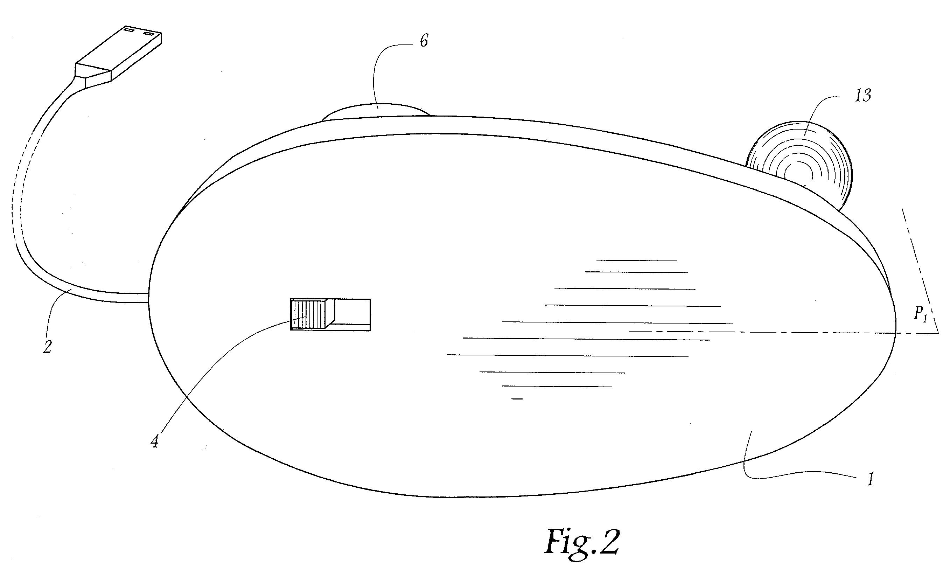

On notera que le dispositif des figures 1 et 2 ne peut commander d'effectuer un déplacement que dans un nombre limité de directions, si bien qu'il présente l'avantage de pouvoir être facilement employé, en particulier par de jeunes enfants dont les gestes sont encore imprécis.

Le bouton coulissant 4 commande le déplacement de l'ensemble des commutateurs 27 à 32, lesquels peuvent être soit tous tels qu'à la figure 4, soit tous tels qu'à la figure 5.

Lorsque ces commutateurs 27 à 32 sont tels qu'à la figure 4, le dispositif de commande des figures 1 et 2 est réglé pour un droitier. La boule 13 de la manette 3 est alors destinée à être tenue et manoeuvrée par la main droite d'un utilisateur, tandis que les boutons-poussoir 5 à 9 sont destinés à être poussés par les doigts de la main gauche de cet utilisateur. Si ce dernier bascule la manette 3 vers la droite, c'est-à-dire dans la direction symbolisée par la flèche F₁ à la figure 1, le disque 12 vient contre le capteur 17, ce qui provoque la fermeture de l'interrupteur 21 et l'émission de l'ordre d'effectuer un déplacement vers la droite, au niveau de l'écran d'affichage de l'ordinateur.

Lorsque les commutateurs 27 à 32 sont tels qu'illustrés à la figure 5, le dispositif de commande des figures 1 et 2 est réglé pour un gaucher. La boule 13 de la manette 3 est alors destinée à être tenue et manoeuvrée par la main gauche d'un utilisateur, tandis que les boutons-poussoir 5 à 9 sont destinés à être poussés par les doigts de la main droite de cet utilisateur. Si ce dernier bascule la manette 3 vers la gauche, c'est-à-dire dans la direction symbolisée par la flèche F₁, le disque 12 vient contre le capteur 17, ce qui provoque la fermeture de l'interrupteur 21 et l'émission de l'ordre d'effectuer un déplacement vers la gauche, au niveau de l'écran d'affichage de l'ordinateur.

Par conséquent, le sens indiqué dans l'ordre émis par l'unité de traitement 33, suite au basculement de la manette 3 dans la direction symbolisée par la flèche F₁, est inversé lorsque les commutateurs 27 à 30 changent d'état.

L'effet d'un déplacement de la manette 3 dans une direction autre que celle symbolisée par la flèche F₁ se déduit aisément de ce qui précède.

Lorsque les commutateurs 31 et 32 changent d'état, l'ordre émis par l'unité de traitement 33 suite à une pression sur le bouton-poussoir 5 et l'ordre émit suite à une pression sur le bouton-poussoir 6 sont permutés.

Il ressort de ce qui précède qu'il est aussi facile pour un gaucher que pour un droitier d'utiliser le dispositif des figures 1 et 2. Il ne peut en être ainsi avec un dispositif de commande de l'art antérieur que si la manette et les boutons de commande que possède ce dispositif sont tous disposés le long d'une ligne avant-arrière, les termes « avant » et « arrière » utilisés ici se référant à l'orientation du dispositif de commande par rapport à un utilisateur l'employant. Les boutons-poussoir 5 à 9 ne sont pas disposés selon une telle ligne avant-arrière, si bien que le but mentionné dans l'introduction est atteint.

Le changement d'état de la totalité des commutateurs 27 à 32 contrebalance l'effet du pivotement d'un demi-tour qui fait passer à gauche les éléments du dispositif de commande auparavant à droite, à droite les éléments précédemment à gauche, du côté avant les éléments auparavant du côté arrière, et du côté arrière les éléments auparavant du côté avant.

Par ailleurs, on notera que les coûts de production et de commercialisation d'exemplaires du dispositif de commande des figures 1 et 2 sont nettement inférieurs aux coûts de production et de commercialisation à la fois de dispositifs de commande pour droitier et de dispositifs de commande pour gaucher.

## Revendications

1. Dispositif de commande d'un ordinateur, ce dispositif comportant :
- une manette articulée (3) apte à être déplacée pour exprimer un ordre d'effectuer un déplacement dans une direction,
- des capteurs (14, 15, 16, 17) disposés pour émettre des signaux amonts dépendant de la position de la manette (3) et exprimant l'ordre, et
- une unité de traitement (33) prévue pour convertir les signaux amonts en un signal aval qui contient l'ordre et qui est adapté pour commander directement l'ordinateur,
**caractérisé en ce qu'**il comporte des moyens (27, 28, 29, 30) pour pouvoir inverser ou non la direction indiquée dans l'ordre contenu par le signal aval.

2. Dispositif selon la revendication 1, **caractérisé en ce que** les moyens pour pouvoir inverser ou non la direction indiquée dans l'ordre contenu par le signal aval comportent des commutateurs (27, 28, 29, 30) connectés de manière à pouvoir permuter deux à deux les connexions entre l'unité de traitement (33) et les capteurs (14, 15, 16, 17).

3. Dispositif selon la revendication 1 ou 2, **caractérisé en ce qu'**il comporte, d'une part, au moins deux boutons-poussoir (5, 6) dont chacun est prévu pour émettre l'un d'au moins deux autres ordres sous forme de signaux à destination de l'unité de traitement (33) et, d'autre part, d'autres commutateurs (31, 32) connectés de manière à pouvoir permuter ou non ces deux autres ordres, entre les boutons-poussoir (5, 6) et l'unité de traitement (33).

4. Dispositif selon la revendication 3, **caractérisé en ce que** chaque bouton-poussoir (5, 6) occupe l'un de deux emplacements sensiblement symétriques l'un de l'autre par rapport à un plan (P₁) passant par la manette (3).

5. Dispositif selon l'une quelconque des revendications précédentes, **caractérisé en ce que** les capteurs (14, 15, 16, 17) sont au nombre de quatre, la manette (3) étant rappelée vers une première position, neutre, dans laquelle cette manette (3) n'agit sur aucun des quatre capteurs (14, 15, 16, 17), la manette (3) pouvant être également placée dans des deuxième, troisième, quatrième et cinquième positions dans chacune desquelles cette manette (3) n'agit que sur l'un des quatre capteurs (14, 15, 16, 17), la deuxième et la troisième position étant sensiblement symétriques l'une de l'autre par rapport à un premier plan (P₁), la quatrième et la cinquième position étant sensiblement symétriques l'une de l'autre par rapport à un deuxième plan (P₂) sensiblement perpendiculaire audit premier plan (P₁).

6. Dispositif selon les revendications 2 et 5, **caractérisé en ce que** les commutateurs (27, 28, 29, 30) sont connectés de manière à pouvoir permuter les deux connexions entre l'unité de traitement (33) et les deux capteurs (14, 15) sur lesquels la manette (3) agit successivement lorsqu'elle est placée dans la deuxième puis dans la troisième position, les commutateurs (27, 28, 29, 30) étant connectés de manière à pouvoir permuter les deux connexions entre l'unité de traitement (33) et les deux capteurs (16, 17) sur lesquels la manette (3) agit successivement lorsqu'elle est placée dans la quatrième puis dans la cinquième position.

7. Dispositif selon la revendication 2 ou 6, **caractérisé en ce qu'**il comporte un organe de commande (4) déplaçable manuellement et prévu pour commander le changement d'état de la totalité des commutateurs (27, 28, 29, 30, 31, 32).
